# EUROPÄISCHE PATENTSCHRIFT

(11) **EP 1 512 703 B1**
(45) Veröffentlichungstag und Bekanntmachung des Hinweises auf die Patenterteilung: **25.05.2011**
(21) Anmeldenummer: 04019875.6
(22) Anmeldetag: 21.08.2004
(51) Int. Cl.: C08F 222/20, C08F 2/24

(54) **Verwendung copolymerisierbarer Tenside in der Emulsionspolymerisation**
Use of copolymerisable surfactants in the emulsion polymerisation
Utilisation de tensio-actifs copolymerisables dans la polymerisation en emulsion

(30) Priorität: 30.08.2003 DE 10340081
(43) Veröffentlichungstag der Anmeldung: 09.03.2005
(73) Patentinhaber: Cognis IP Management GmbH, 40589 Düsseldorf (DE)
(72) Erfinder: Breuer, Wolfgang, Dr., 41352 Korschenbroich (DE); Tintillier, Patrick, 77310 Boissise le Roi (FR)

(56) Entgegenhaltungen:
- EP-A- 0 248 612
- DE-A- 19 831 706

## Beschreibung

### Gebiet der Erfindung

Die Erfindung liegt auf dem Polymersektor und betrifft ein Verfahren zur Emulsionspolymerisation unter Verwendung neuer copolymerisierbarer Emulgatoren. Sie betrifft darüber hinaus die Verwendung von olefinisch ungesättigten Estern spezieller Struktur als Emulgatoren in der Emulsionspolymerisation.

### Stand der Technik

Bei der Emulsionspolymerisation handelt es sich um ein spezielles Verfahren der Polymerisation, bei dem gering wasserlösliche olefinisch ungesättigte Monomere mit Hilfe von Emulgatoren in Wasser emulgiert und unter Verwendung wasserlöslicher Initiatoren wie beispielsweise Kaliumperoxodisulfat oder Redoxinitiatoren polymerisiert werden. Anionische und/oder nicht-ionische Tenside sind hierbei die wesentliche Bestandteile. Über den Micellaufbau in der wässrigen Lösung gewährleisten sie den Prozess der Emulsionspolymerisation.

Die wesentliche Verwendung von Latices im Bereich der Coating-Industrie sind in den folgenden Anwendungsgebieten zu finden: Farben und Lacke für dekorative Zwecke und industrielle Anwendungen, Textilbehandlungen, Papierbeschichtungen und Klebstoffe, also in Bereichen, wo mit Hilfe von Dispersionen im weitesten Sinne nach Abtrocknung Filme gebildet werden.

In den meisten Fällen sind die verwendeten Tenside bzw. Emulgatoren physikalisch an der Oberfläche der Latices gebunden und stehen im dynamischen Gleichgewicht mit der Wasserphase. Mit Ausnahme eines geringen Teils bedingt durch Transferreaktionen während der Polymerisation sind die Tenside nicht covalent an die Polymerpartikel gebunden. Die quantitative Verteilung des Emulgators basierend auf Sulfosuccinaten lässt sich beispielsweise mittels Radiotracertechnik mit ³⁵S bestimmen. Wie dem Fachmann bekannt, sind dabei etwa 15 % des Emulgators auf den Latices fixiert, vergl. R. Otto "Radiotracermethode zur Bestimmung der Verteilung schwefelhaltiger Dispergiermittel in Emulsionspolymerisaten", Isotopenpraxis 20 (1984), 378-381.

Verbesserungen hinsichtlich der Filmbildung bzw. verbesserte Filmstabilität z.B. gegenüber Scherkräften oder eine erhöhte Wasserstabilität werden seit einiger Zeit auch den sogenannten copolymerisierbaren Tensiden zugeschrieben. Hierbei handelt es sich um Tenside, die eine polymerisierbare Gruppe tragen. Sie können somit auch als spezielle Monomere reagieren und am Polymerisationsprozess teilnehmen.

In der Literatur werden diese speziellen Monomere auch als Surfmers oder als Non-Migratory Surfactants bezeichnet. Diese Tenside werden üblicherweise in den Polymerpartikeln während des Emulsionspolymerisationsprozesses mit eingebaut. Durch die chemische Bindung an Polymerpartikel können diese Surfmers im Gegensatz zu den üblicherweise verwendeten Tensiden nicht ohne weiteres desorbieren und verbleiben in bzw. an der Oberfläche der Polymerteilchen. Die Folge sind nach allgemeiner Auffassung der Fachwelt Vorteile hinsichtlich Latexstabilität und Wasseraufnahme für die Latices bzw. daraus gebildeten Filmen. Vergl. hierzu Jo Grade "Non-Migratory Surfactants" in European Coatings Journal, 2001, 5, 66-70.

Eine ausführliche Zusammenfassung über polymerisierbare Tenside (Surfmers) für die Emulsionspolymerisation ist widergegeben in: "Surfactants in Polymers, Coatings, Inks and Adhesives"; edited by David R. Karsa; ISBN 0-8493-2808-X; Blackwell Publishing, CRC Press 2003; Chapter 3, Seiten 71 - 92. Surfmers lassen sich beispielsweise ausgehend von Maleinsäureanhydrid synthetisieren. Die in den erhaltenen Verbindungen verbleibende C=C-Doppelbindung ist dann der reaktive copolymerisierbare Teil der Tenside, vergleiche hierzu die Seiten 72 - 75 der gerade genannten Publikation.

Eine andere Art von copolymerisierbaren Tensiden wird von S. Poulton in der Zeitschrift PPCJ, 192 (2002) 4457, Seiten 24 - 26, beschrieben. Hierbei handelt es sich um alkoxylierte (Meth)acrylsäurederivate, sogenannte Bisomere. Diese Bisomere eignen sich etwa zum Senken der Glasübergangstemperatur von Polymeren und zur Herstellung von VOC-armen Polymerdispersionen.

Literaturbekannt ist der Laurylsäure-Halbester von Maleinsäure-Anhydrid, kommerziell verfügbar unter der Bezeichnung "Setalux 6774 EPL" der Firma Akzo Nobel Resins, vergl. (D. Mestach: "New high performance materials for waterborne acylic surface", Double Liaison―Physique, Chimie & Economie des Peintures & Adhesifs, 2001, No. 523, S. 33-38).. Die schlechte Wasserlöslichkeit des Produktes steht aber einigen Anwendungen im Rahmen der Emulsionspolymerisation entgegen. Weiterhin bekannt ist "TREM LF 40" aus dem Hause der Anmelderin, ein auf Sulfosuccinatbasierendes Produkt. Anwendungen werden u.a. beschrieben in: M.B. Urquiola, V.L. Dimonie, E.D. Sudol and M.S. El-Aasser, "Emulsion Polymerization of Vinyl Acetate Using a Polymerizable Surfactant. II. Polymerization Mechanism", J. Polym. Sci. Part A: Polym. Chem., 30 (1992) 2631.

Es ist auch bekannt, dass sich die Wasserlöslichkeit von Maleinsäure-Halbestern dadurch verbessern lässt, dass man sie mit Ethylenoxid umsetzt, wobei das Ethylenoxid an der Carboxylgruppe der Maleinsäure-Halbester reagiert. Vergl. hierzu die o.g. Publikation "Surfactants in Polymers, Coatings, Inks and Adhesives", dort auf S. 74 - 75.

Die deutsche Offenlegungsschrift DE-A-19831706 beschreibt ein Verfahren zur Herstellung von Polymeren durch Emulsionspolymerisation ungesättigter Monomere, bei dem man als copolymeriserbare Emulgatoren Maleinsäureester der Formel (I) einsetzt,

R¹OOC-CH=CH-COO-(BO)_{z}(PO)_{y}(EO)ₓR² (I)

in der R¹ für einen linearen oder verzweigten Alkyl- und/oder Alkenylrest mit 6 bis 24 Kohlenstoffatomen, R² für einen Alkylrest mit 1 bis 4 Kohlenstoffatomen, BO für eine Butylenoxideinheit, PO für eine Propylenoxideinheit und EO für eine Ethylenoxideinheit steht und die Zahlen x, y und z unabhängig voneinander für 0 oder Zahlen von 1 bis 100 stehen, mit der Maßgabe, dass mindestens eine der Zahlen x, y und z von 0 verschieden ist.

EP 0 248 612 A2 beschreibt Verdickungsmittel für Emulsionsfarben enthaltend ungesättigte Ester.

### Beschreibung der Erfindung

Gegenstand der Erfindung ist die Verwendung von olefinisch ungesättigten Estern der Formel (I)

HOOC-CH=CH-COO-(BO)_{z}(PO)_{y}(EO)ₓR¹ (I)

in der R¹ für einen Alkylrest oder Alkylphenolrest mit 8 bis 24 Kohlenstoffatomen, BO für eine Butylenoxideinheit, PO für eine Propylenoxideinheit und EO für eine Ethylenoxideinheit steht und die Zahlen x, y und z unabhängig voneinander für 0 oder Zahlen von 1 bis 50 stehen, mit der Maßgabe, dass mindestens eine der Zahlen x, y und z von 0 verschieden ist, wobei die Carboxylgruppe der Verbindungen (I) teilweise oder ganz in neutralisierter Form vorliegen kann und die C=C-Doppelbindung cis- oder trans-konfiguriert sein kann, als copolymerisierbare Emulgatoren in der Emulsionspolymerisation olefinisch ungesättigter Monomerer.

Sofern die C=C-Doppelbindung der olefinisch ungesättigten Ester der Formel (I) cis-konfiguriert ist, handelt es sich um Maleinsäureester, ist sie trans-konfiguriert, handelt es sich um Fumarsäureester. Maleinsäureester der Formel (I) sind im Rahmen der vorliegenden Erfindung bevorzugt.

Wie ausgeführt kann R¹ ein Alkylrest oder Alkylphenolrest mit 8 bis 24 Kohlenstoffatomen sein. Alkylreste können geradkettig oder verzweigt sein, nicht cyclisch oder cyclisch. Enthält R¹ ein cyclisches Strukturelement, kann dieses auch ein oder mehrere Alkylsubstituenten tragen, die wiederum geradkettig oder verzweigt sein können. Unter einem Alkylphenolrest wird ein Phenylrest verstanden, der durch ein oder mehrere Alkylreste substituiert sein kann. Der Rest R¹ weist insgesamt 8 bis 24 Kohlenstoffatome auf. Vorzugsweise hat R¹ die Bedeutung eines Alkylrestes, wobei geradkettige und verzweigte Alkylreste besonders bevorzugt sind.

Die Verbindungen (I) werden im Rahmen der Emulsionspolymerisation vorzugsweise in teilweiser oder vollständig neutralisierter Form eingesetzt ("Salzform"). Diese ist leicht zugänglich, indem man die Verbindungen (I) nach üblichen Methoden teilweise oder ganz neutralisiert, beispielsweise mit Alkali- oder Erdalkalihydroxiden wie Natrium-, Kalium-, Calcium- oder Magnesiumhydroxid oder mit Aminen wie Ammoniak oder Ethanolaminen. Die Salzform der Verbindungen (I) zeichnet sich durch eine gute Wasserlöslichkeit aus.

Bei der Herstellung von Polymeren durch Emulsionspolymerisation olefinisch ungesättigter Monomere unter Einsatz der Verbindungen (I), insbesondere in Salzform, werden Polymere mit besonderer Scher- und Elektrolytbeständigkeit sowie niedrigem Koagulatgehalt erhalten .
In einer Ausführungsform werden dabei Latices erhalten, die sich ihrerseits zusätzlich durch eine besondere Wasserresistenz sowie Stabilität gegenüber Temperaturschwankungen auszeichnen und bei denen keine Migration des Emulgators in den Film festzustellen ist.
Ein weiterer Vorteil des der Emulsionspolymerisation unter Einsatz der Verbindungen (I) besteht ferner darin, dass sie praktisch schaumfrei ist und die Bildung flüchtiger organischer Stoffe zuverlässig vermieden wird. Da der Emulgator (I) praktisch quantitativ in das Polymer eingebaut wird, sind mit dessen Verwendung auch keine Probleme hinsichtlich der biologischen Abbaubarkeit verbunden. Die olefinisch ungesättigten Ester (I) zeigen des weiteren praktisch keine Tendenz zur Homopolymerisation.
Die Emulsionspolymerisation unter Einsatz der Verbindungen (I) zeichnet sich weiterhin dadurch aus, dass sie zu positiven anwendungstechnischen Eigenschaften wie beispielsweise einer deutlich geringere Wasseraufnahme von hergestellten Filmen, insbesondere solchen auf Basis von Styrol/Butylacrylat bzw. Vinylacetat/Butylacrylat führt.

Die aufgeführten Beispiele verdeutlichen die positiven Eigenschaften der hier dargestellten olefinisch ungesättigten Ester. Auch Kombinationen mit typischen Tensiden nicht-ionischer und anionischer Natur sind einsatzfähig und zeigen ebenfalls ein positives Eigenschaftsprofil.

### Olefinisch ungesättigte Ester (I)

Die als Emulgatoren einzusetzenden olefinisch ungesättigten Ester (I) können nach einschlägigen Verfahren der präparativen organischen Chemie erhalten werden können. Ein Beispiel hierfür ist etwa, Maleinsäure oder Maleinsäureanhydrid mit einem endgruppenverschlossenen Polyglycolether der Formel (II),

HO-(BO)_{z}(PO)_{y}(EO)ₓR¹ (II)

in der R¹, BO, PO, EO, x, y und z dieselbe Bedeutungen wie in Formel (I) haben, im in etwa molaren Verhältnis 1 : 0,9 bis 1 : 1,1 bei Temperaturen im Bereich von 80 bis 120°C innerhalb von 4 bis 6 Stunden zur Reaktion zu bringen und das Reaktionswasser kontinuierlich zu entfernen. Der entstandene Partialester (I) kann dann gewünschtenfalls wie oben bereits gesagt teilweise oder vollständig neutralisiert werden.

Typische Beispiele für Emulgatoren (I), die im Sinne des erfindungsgemäßen Verfahrens eingesetzt werden können, sind olefinisch ungesättigte Ester, deren Rest R¹, sich von Fettalkoholen, wie z.B. Capronalkohol, Caprylalkohol, 2-Ethylhexylalkohol, Caprinalkohol, Laurylalkohol, Isotridecylalkohol, Myristylalkohol, Cetylalkohol, Palmoleylalkohol, Stearylalkohol, Isostearylalkohol, Myristylalkohol, Elaidylalkohol, Petroselinylalkohol, Linolylalkohol, Linolenylalkohol, Elaeostearylalkohol, Arachylalkohol, Gadoleylalkohol, Behenylalkohol, Erucylalkohol und Brassidylalkohol sowie deren technische Mischungen ableiten. Bevorzugt sind Emulgatoren der Formel (I), in der R¹ für einen Alkylrest mit 8 bis 14 Kohlenstoffatomen steht.

In einer Ausführungsform setzt man solche Emulgatoren der Formel (I) ein, in der x und y unabhängig voneinander für Zahlen von 1 bis 20 stehen und z die Zahl 0 bedeutet. Vorzugsweise setzt man solche Emulgatoren der Formel (I) ein, in der x für Zahlen von 3 bis 12, insbesondere 3 bis 8 steht und y und z jeweils die Zahl 0 bedeuten. In einer weiteren bevorzugten Ausführungsform setzt man Emulgatoren der Formel (I) ein, in der der Rest R¹ für einen Alkylrest mit 8 bis 14 Kohlenstoffatomen steht. In einer weiteren Ausführungsform setzt man Emulgatoren der Formel (I) ein, in der der Rest R¹ für einen Nonylphenylrest steht.

In einer Ausführungsform setzt man die Emulgatoren (I) in Mengen von 0,1 bis 25 Gew.-% - bezogen auf die Summe der Monomere - ein.

### Monomere

Die erfindungsgemäß einzusetzenden olefinisch ungesättigten Ester der allgemeinen Formel (I) eignen sich als Emulgatoren bei der Emulsionspolymerisation von nahezu sämtlichen technisch wichtigen, im wesentlichen wasserunlöslichen Monomeren, vorzugsweise aber (Meth)acryl-, Styrol- und Vinylverbindungen.

Typische Beispiele für diese Monomeren sind Vinylaromaten, z.B. Styrol, Divinylbenzol oder Vinyltoluol, polymerisierbare Olefine und Diolefine wie Propen, Butadien oder Isopren, Ester der Acryl- oder Methacrylsäure mit linearen oder verzweigten Alkoholen mit 1 bis 18 Kohlenstoffatomen, insbesondere von Alkoholen mit 1 bis 8 Kohlenstoffatomen und - besonders bevorzugt - von Methylestern, Ethylestern und Butylestern derselben, Vinylester von Säuren mit 2 bis 12 Kohlenstoffatomen, insbesondere Vinylacetat, Vinylpropionat, Vinyl-2-ethylhexanat und Vinyllaurat, Vinylalkylether mit 1 bis 8 Kohlenstoffatomen aufweisenden Alkylgruppen, Vinylchlorid, Vinylidenchlorid und dergleichen.

Die vorgenannten Monomeren können in Gegenwart der erfindungsgemäß einzusetzenden copolymerisierbaren Emulgatoren (I) homopolymerisiert oder mit anderen der genannten Verbindungen aus der vorstehenden Aufzählung copolymerisiert werden. Weiterhin können Copolymerisationen durchgeführt werden, bei denen bis zu 50 Gew.-% weitere, von den erfindungsgemäßen Verbindungen (I) verschiedene, an sich teilweise oder vollständig wasserlösliche Monomere beteiligt sind, zum Beispiel Acrylnitril, Methacrylnitril, Halbester der Malein- bzw. Fumarsäure mit 1 bis 8 Kohlenstoffatomen, Acrylsäure, Methacrylsäure, Maleinsäure, Fumarsäure, Crotonsäure und/oder Itaconsäure.

In einer bevorzugten Ausführungsform setzt man in dem erfindungsgemäßen Verfahren als Monomere Kombinationen von Styrol/Butylacrylat, Vinylacetat/Butylacrylat oder Styrol/Butadien ein.

### Co-Emulgatoren

Weiterhin ist es auch möglich, die erfindungsgemäß zu verwendenden olefinisch ungesättigten Ester (I) in Kombination mit bekannten nichtionischen und/oder anionischen Co-Emulgatoren einzusetzen. Dies kann zu Dispersionen mit erhöhter Stabilität, z.B. gegenüber Scherkräften, Temperatureinflüssen und Elektrolyten führen. Die Co-Emulgatoren werden dabei in Mengen von 0,5 bis 5, vorzugsweise 1 bis 3 Gew.-%, bezogen auf die Gesamtheit der eingesetzten Monomere, zugegeben. Dabei ist es möglich, die Co-Emulgatoren zu Beginn der Polymerisation zusammen mit den Emulgatoren vorzulegen oder sie im Verlauf der Polymerisation zuzudosieren. Eine weitere Variante sieht vor, eine Präemulsion unter Verwendung oder Mitverwendung der Co-Emulgatoren herzustellen und diese im Verlauf der Polymerisation zuzudosieren. Es ist auch möglich, zur Nachstabilisierung der unter Verwendung der erfindungsgemäßen Acrylsäure- und/oder Methacrylsäureester erhaltenen Dispersionen diese mit Co-Emulgatoren zu versetzen.

Die erfindungsgemäß einzusetzenden olefinisch ungesättigten Ester der Formel (I) können auch zusammen mit Schutzkolloiden eingesetzt werden. Typische Beispiele für derartige Schutzkolloide sind vollständig oder teilweise verseifte Homo- und/oder Copolymere des Vinylacetats, z.B. teilverseiftes Polyvinylacetat, oder vollständig verseifte Copolymere aus Vinylacetat und Vinylethern. Bevorzugte Copolymere weisen 1 bis 4 Kohlenstoffatome im Etherteil des Polyvinylethers auf. Weitere Schutzkolloide können von Polysacchariden abgeleitet sein. So sind insbesondere Cellusoseether wie Hydroxyethylcellulose, Hydroxypropylcellulose, Carboxymethylcellulose, Methylcellulose, Ethylcellulose oder Cellulose-Mischether geeignet. Weiterhin geeignet sind Polyacrylamid sowie dessen Copolymere mit Acrylsäure, Acrylnitril oder Acrylestern. Auch Kondensationsprodukte aus Naphthalinsulfonsäure und Formaldehyd oder andere wasserlösliche Formaldehydharze, insbesondere Harnstoff-Formaldehyd-Harze, können ver-wendet werden. Schließlich sind Casein, Gelatine, Gummi arabicum sowie natürliche Stärke und substituierte Stärkederivate wie Hydroxyethylstärke geeignete Schutzkolloide.

### Emulsionspolymerisation

Die unter Verwendung der olefinisch ungesättigten Ester der allgemeinen Formel (I) im ersten Schritt des Verfahrens üblicherweise herzustellenden wäßrigen Dispersionen weisen in der Praxis 15 bis 75 Gew.-% polymerisierte Monomere (Trockenrückstand) in Wasser oder einem Gemisch von Wasser und wasserlöslichen organischen Lösemitteln auf. Bevorzugt ist der Bereich von 20 bis 60 Gew.-% Trockenrückstand; jedoch sind für spezielle Anwendungen auch wäßrige Dispersionen mit weniger als 15 Gew.-% Trockenrückstand herstellbar. Bei den vorgenannten Verfahren zur Emulsionspolymerisation können auch weitere übliche Polymerisationshilfsstoffe eingesetzt werden, insbesondere Initiatoren, z.B. anorganische Peroxidverbindungen wie Kalium- oder Ammoniumpersulfat oder Wasserstoffperoxid; weiterhin organische Peroxidverbindungen oder organische Azoverbindungen, soweit diese für die Emulsionspolymerisation verwendbar sind. Die Initiatoren werden in üblichen Mengen, d.h. von 0,05 bis 2 Gew.-%, vorzugsweise von 0,1 bis 0,5 Gew.-% eingesetzt. Weitere geeignete Hilfsstoffe sind Puffersubstanzen, z.B. Natriumhydrogencarbonat, Natriumpyrophosphat oder Natriumacetat, die in Mengen von bis zu 2 Gew.-% eingesetzt werden können. Auch Beschleuniger wie Formaldehydsulfoxylat können eingesetzt werden. Weiterhin können übliche, bei der Emulsionspolymerisation verwendete Molekulargewichtsregler, z.B. Butenol oder auch organische Thioverbindungen wie Mercaptoethanol, Thioglycolsäure, Octylmercaptan oder tert.-Dodecylmercaptan verwendet werden. Für die Durchführung der Polymerisationsverfahren kommen verschiedene, üblicherweise bei der Emulsionspolymerisation angewandte Methoden in Betracht, z.B. eine Gesamtvorlage aller Reaktanden, ein Monomerenzulauf oder ein Emulsionszulauf. Im allgemeinen wird dazu die Temperatur des Polymerisationsmediums in einem Bereich von 40 bis 100, insbesondere 50 bis 90°C, gehalten. Als pH-Wert wird zweckmäßigerweise ein Bereich zwischen 3 und 9 eingehalten, jedoch ist mit den erfindungsgemäßen Verbindungen auch eine Emulsionspolymerisation bei niedrigeren pH-Werten möglich. Die vorgenannten möglichen Verfahrensvarianten zur Emulsionspolymerisation werden zweckmäßigerweise in kühl- und heizbaren, mit Rührer und Temperaturmeßeinrichtung versehenen Behältern, z.B. in Rührdruckkesseln, durchgeführt. Ebenfalls möglich ist die Verwendung von Rohrschlangenreaktoren oder sogenannten Loop-Reaktoren. Nach Beendigung der Polymerisation wird die Polymerisatdispersion zweckmäßigerweise abgekühlt und über Siebeinrichtungen aus dem Reaktor entfernt. Falls die Reaktionsprodukte als Festprodukte isoliert werden sollten, wird die Polymerisatdispersion zweckmäßigerweise ausgefällt oder sprühgetrocknet. Bevorzugt ist jedoch eine direkte Verwendung der bei der Polymerisation erhaltenen Dispersionen als Bindemittel für Farben, Klebstoffe, Papierstreichmassen und andere Beschichtungsmittel. Weitere Bedingungen für Verfahren zur Emulsionspolymerisation unter Verwendung der erfindungsgemäß einzusetzenden Methacrylsäureester der allgemeinen Formel (I) können von dem Fachmann in üblicher Weise an die jeweiligen Erfordernisse angepaßt oder frei gewählt werden.

Die erfindungsgemäß einzusetzenden olefinisch ungesättigten Ester (I) lassen sich leicht und vollständig zusammen mit anderen, davon verschiedenen olefinisch ungesättigten Monomeren polymerisieren, wobei sie die Bildung einer schaumfreien und homogenen Emulsion fördern.

### Beispiele

### Eingesetzte Emulgatoren (I)

**Emulgator 1:** Umsetzungsprodukt aus einem Anlagerungsprodukt von 5 Mol Ethylenoxid an 1 Mol eines C₁₀-Fettalkohols und Maleinsäureanhydrid im molaren Verhältnis 1 : 1, neutralisiert mit Natronlauge. Aktivsubstanzgehalt = 25 Gew.% in Wasser.

**Emulgator 2:** Umsetzungsprodukt aus einem Anlagerungsprodukt von 5 Mol Ethylenoxid an 1 Mol eines C₁₀-Fettalkohols und Maleinsäureanhydrid im molaren Verhältnis 1 : 1, neutralisiert mit Ammoniak. Aktivsubstanzgehalt = 25 Gew.% in Wasser.

**Emulgator 3:** Umsetzungsprodukt aus einem Anlagerungsprodukt von 3 Mol Ethylenoxid an 1 Mol eines C₁₂-Fettalkohols und Maleinsäureanhydrid im molaren Verhältnis 1 : 1, neutralisiert mit Natronlauge. Aktivsubstanzgehalt = 25 Gew.% in Wasser.

**Disponil A 3065:** Handelsüblicher Emulgator auf Basis von ethoxylierten Fettalkoholen, Aktivsubstanzgehalt ca. 65 Gew.-% in Wasser (Fa. Cognis Deutschland GmbH & Co KG). Wird in den Beispielen 8 und 9 als Coemulgator eingesetzt.

**Sulfopon 101 spez.:** Handelsüblicher Emulgator auf Basis von Natriumlaurylsulfat, Aktivsubstanzgehalt ca. 30 Gew.-% in Wasser (Fa. Cognis Deutschland GmbH & Co KG). Wird in den Beispielen 8 und 9 als Coemulgator eingesetzt.

**Disponil AES 13:** Handelsüblicher Emulgator auf Basis von Alkylacrylatpolyethersulfat, Na-Salz, Aktivsubstanzgehalt ca. 32 Gew.-% in Wasser (Fa. Cognis Deutschland GmbH & Co KG). Wird in den Beispielen 8 und 9 als Coemulgator eingesetzt.

### Testmethoden

Die hergestellten Emulsionen wurden anhand folgender Parameter charakterisiert:

Der **Trockenrückstand** wurde wie folgt bestimmt: 5 Gramm der Emulsion wurden in einen Trockenrückstandsapparat vom Typ 709301 der Fa. Satorius gefüllt und bis zur Gewichtskonstanz getrocknet. Das Ergebnis wird in Gewichtsprozent Trockenrückstand angegeben. In diesem Sinne sind die Angaben in den nachfolgenden Tabellen zu verstehen.

Die **Viskosität** der hergestellten Emulsionen wurde nach Brookfield bei 20 upm und Einsatz von Spindel 1 bestimmt, wobei die Emulsionen als solche eingesetzt wurden. Die Angaben der Viskosität in den nachfolgenden Tabellen erfolgt in der Einheit mPas.

Der **pH-Wert** der hergestellten Emulsionen wurde gemäß DIN 19268 elektrochemisch unter Verwendung einer pH-Elektrode bestimmt.

Der **mittlere Teilchendurchmesser** der hergestellten Emulsionen wurde mittels eines Coulter Nano-Sizers bestimmt. Die Angaben des Teilchendurchmessers in den nachfolgenden Tabellen erfolgt in der Einheit nm (Nanometer).

Der **Gesamt-Koagulat-Gehalt** der hergestellten Emulsionen wurde gravimetrisch nach Abfiltrieren über ein 80 Mikrometer-Filter (Naßkoagulat) bestimmt.
Der derart ermittelte Koagulatgehalt wird als % Koagulat bezogen auf den Feststoffgehalt der Emulsion angegeben. Unter dem Feststoffgehalt der Emulsion ist dabei die eingesetzte Menge der Monomeren zu verstehen.
Der Koagulatgehalt ist für den Fachmann eine wichtige Größe zur Beurteilung der Güte einer durch Emulsionspolymerisation hergestellten Emulsion.

### Beispiel 1

| Dosierung 1 (Prä-Emulsion) | |
|---|---|
| Styrol | 235,0 g |
| Butylacrylate | 235,0 g |
| Methacrylsäure | 7,5 g |
| Acrylamid | 7,5 g |
| N-Methylolcrylamid | 15,0 g |
| Emulgator 1 *) | 12,5 g |
| Demineralisiertes Wasser | 287,5 g |

| | |
|---|---|
| [*) Menge bezogen auf 100 % Aktivsubstanz] | |

| Dosierung 2 | |
|---|---|
| Natrium metabisulfit | 2,5 g |
| Demineralisiertes Wasser | 97,5 g |

| Dosierung 3 | |
|---|---|
| Natriumperoxodisulfat | 2,5 g |
| Demineralisiertes Wasser | 97,5 g |

### Verfahren

- Der Reaktor wurde mit Dosierung 3 und 150 ml von Dosierung 1 beladen.
- Der Reaktor wurde 15 Minuten mit Stickstoff gespült. Anschließend wurde auf 63 °C aufgeheizt. Man startete die Polymerisation bei 60 °C, indem man 5 ml von Dosierung 2 in den Reaktor einbrachte.
- Bei 63°C wurden die Dosierungen 1 (Rest) and 2 kontinuierlich innerhalb von 2,5 Stunden zudosiert.
- Anschließend ließ man 1 Stunde bei einer Innentemperatur von 63° C nachpolymerisieren. Hierzu wurde die Temperatur des Heizmantels auf 66° C gebracht.
- Man ließ auf 20 °C abkühlen und stellte dann mit Ammoniak einen pH-Wert von 6,8 ein.

### Beispiel 2

Exakt wie Beispiel 1, wobei in Dosierung 1 statt des Emulgators 1 (mengengleich) der Emulgator 2 eingesetzt wurde. Bei der abschließenden Neutralisation wurde ein pH-Wert von 7,5 eingestellt.

| Testergebnisse für die Beispiele 1 und 2 | | |
|---|---|---|
| | **Beispiel 1** | **Beispiel 2** |
| **Trockenrückstand in %** | **42,4** | **42,7** |
| **Viskosität nach Brookfield** in mPas (20 upm/Spindel 1): | **80** | **80** |
| **pH-Wert der Dispersion:** | **6,8** | **7,5** |
| **mittlerer Teilchendurchmesser** in nm | **388** | **562** |
| **Gesamt-Koagulat in %** | **0,13** | **0,20** |

Im Vergleich zu konventionellen Emulgatoren ist der Gehalt an Koagulum mit 0,13 bzw. 0,20 % (bezogen auf die eingesetzten Monomere) sehr gut.

### Beispiel 3

Wie Beispiel 1, wobei jedoch in Dosierung 1 nur die halbe Menge an Emulgator 1 eingesetzt wurde (also 6,25 g).

### Beispiel 4

Wie Beispiel 2, wobei jedoch in Dosierung 1 nur die halbe Menge an Emulgator 2 eingesetzt wurde (also 6,25 g).

| Testergebnisse für die Beispiele 3 und 4 | | |
|---|---|---|
| | **Beispiel 1** | **Beispiel 2** |
| **Trockenrückstand in %** | **50,1** | **47,4** |
| **Viskosität nach Brookfield** in mPas (20 upm/Spindel 1): | **40** | **30** |
| **pH-Wert der Dispersion:** | **7,2** | **7,3** |
| **mittlerer Teilchendurchmesser** in nm | **725** | **600** |
| **Gesamt-Koagulat in %** | **0,13** | **0,43** |

Die Ergebnisse hinsichtlich des Koagulats sind gut, der mittlere Teilchendurchmesser ist größer und die Viskosität geringer.

### Beispiel 5

| Dosierung 1 | |
|---|---|
| Kaliumpersulfat | 1,17 g |
| demineralisiertes Wasser | 150,00 g |

| Dosierung 2 | |
|---|---|
| Vinylacetat | 370,92 g |
| Butylacrylat | 157,44 g |
| Acrylsäure | 5,34 g |
| Emulgator 1 *) | 10,67 g |
| demineralized water | 304,46 g |

| | |
|---|---|
| [*) Menge bezogen auf 100 % Aktivsubstanz] | |

### Verfahren

- Der Reaktor wurde mit Dosierung 1 und 90 ml von Dosierung 2 beladen.
- Der Reaktor wurde 15 Minuten mit Stickstoff gespült. Anschließend wurde auf etwa 73 °C aufgeheizt. Man startete die Polymerisation bei 70 °C, indem man die kontinuierliche Zudosierung von Dosierung 2 einleitete.
- Die kontinuierliche Zudosierung von Dosierung 2 dauerte 200 Minuten, wobei die Temperatur in dieser Zeit im Bereich von 70 und 75 °C schwankte.
- Anschließend ließ man 1 Stunde bei einer Innentemperatur von 75° C nachpolymerisieren.
- Man ließ auf 40 °C abkühlen und stellte dann mit Ammoniak einen pH-Wert leicht alkalisch ein.

### Beispiel 6

Wie Beispiel 5, jedoch wurde anstelle des Emulgators 1 in Dosierung 2 mengengleich Emulgator 2 eingesetzt.

### Beispiel 7

Wie Beispiel 5, jedoch wurde anstelle des Emulgators 1 in Dosierung 2 mengengleich Emulgator 3 eingesetzt.

### Vergleichsbeispiel 1 (Vergleich 1)

Wie Beispiel 5, jedoch wurde anstelle des Emulgators 1 in Dosierung 2 mengengleich der handelsübliche Emulgator Trem LF 40 eingesetzt.

| Testergebnisse für die Beispiele 5 bis 7 | | | | |
|---|---|---|---|---|
| | **Vergleich 1** | **Beispiel 5** | **Beispiel 6** | **Beispiel 7** |
| **Trockenrückstand in %** | **54,7** | **52,6** | **42,4** | **51,4** |
| **Viskosität nach Brookfield** in mPas (20 upm/Spindel 1): | **40** | **450** | **40** | **260** |
| **pH-Wert der Dispersion:** | **7,4** | **7,9** | **7,4** | **7,7** |
| **mittlerer Teilchendurchmesser** in nm | **182** | **320** | **360** | **312** |
| **Gesamt-Koagulat in %** | **13,3** | **2,9** | **3,3** | **6,0** |

Im Vergleich zur Emulsion, die unter Einsatz des handelsüblichen Emulgators erhalten wurde (Vergleich 1), zeigten die Emulsionen, die unter Einsatz der erfindungsgemäßen Emulgatoren erhalten wurden (Beispiele 5 bis 7), deutlich geringere Koagulumgehalte.

### Beispiel 8

Wie Beispiel 5, jedoch wurde neben dem eingesetzten Emulgators 1, der in einer Menge von 5,7 g eingesetzt wurde, zusätzlich in Dosierung 2 der Coemulgator Disponil A 3065 in einer Menge von 8,7 g eingesetzt.

### Beispiel 9

Wie Beispiel 8, jedoch wurde der Coemulgator Disponil A 3065 nicht zusammen mit dem erfindungsgemäßen Emulgator 1 in Dosierung 2 eingesetzt, sondern erst in der Nachreaktionsphase.

| Testergebnisse für die Beispiele 8 und 9 | | |
|---|---|---|
| | **Beispiel 8** | **Beispiel 9** |
| **Trockenrückstand in %** | **52,7** | **52,4** |
| **Viskosität nach Brookfield** in mPas (20 upm/Spindel 1): | **138** | **25** |
| **pH-Wert der Dispersion:** | 7,2 | 7,3 |
| **mittlerer Teilchendurchmesser** in nm | **337** | **386** |
| **Gesamt-Koagulat in %** | **1,9** | **1,9** |

Der Zusatz des Co-Emulgators gemäß den Beispielen 8 und 9 zeigt ― verglichen mit Beispiel 5 - eine Reduzierung des Koagulat-Gehaltes.

### Beispiel 10

| Dosierung 1 | |
|---|---|
| 2-Ethylhexylacrylat | 225,40 g |
| Methylmethacrylat | 254,80 g |
| Methacrylsäure | 9,80 g |
| Emulgator 1 *) | 2,94 g |
| Kaliumpersulfat | 1,92 g |
| demineralisiertes Wasser | 252,50 g |

| | |
|---|---|
| [*) Menge bezogen auf 100 % Aktivsubstanz] | |

| Dosierung 2 | |
|---|---|
| Emulgator 1 *) | 6,90 g |
| Natriumhydrogencarbonat | 0,50 g |
| Kaliumpersulfat | 0,24 g |
| demineralisiertes Wasser | 190,00 g |

| | |
|---|---|
| [*) Menge bezogen auf 100 % Aktivsubstanz] | |

| Neutralisierung | |
|---|---|
| Natriumhydrogencarbonat | 5,5 g |
| demineralisiertes Wasser | 49,50 g |

### Verfahren

- Der Reaktor wurde mit Dosierung 2 beladen.
- Der Reaktor wurde 15 Minuten mit Stickstoff gespült. Anschließend wurde auf etwa 88 °C aufgeheizt. Man startete die Polymerisation bei 85 °C, indem man die kontinuierliche Zudosierung von Dosierung 1 (Präemulsion) einleitete.
- Die kontinuierliche Zudosierung von Dosierung 1 dauerte 80 Minuten, wobei die Temperatur in dieser Zeit im Bereich von 87 und 91 °C schwankte.
- Anschließend ließ man 1 Stunde bei einer Innentemperatur von 88° C nachpolymerisieren.
- Man ließ auf 40 °C abkühlen und stellte dann mit einer wässrigen Lösung von Natriumhydrogencarbonat den pH-Wert ein (Neutralisierung).

### Beispiel 11

Wie Beispiel 10, jedoch wurde anstelle des Emulgators 1 in Dosierung 2 mengengleich Emulgator 3 eingesetzt.

| Testergebnisse für die Beispiele 10 und 11 | | |
|---|---|---|
| | **Beispiel 10** | **Beispiel 11** |
| **Trockenrückstand in %** | **48,1** | **49,2** |
| **Viskosität nach Brookfield** in mPas (20 upm/Spindel 1): | **240** | **50** |
| **pH-Wert der Dispersion:** | **6,4** | **6,2** |
| **mittlerer Teilchendurchmesser** in nm | **160** | **125** |
| **Gesamt-Koagulat in %** | **0,64** | **2,1** |

### Vergleichsbeispiel 2 (Vergleich 2)

Wie Beispiel 1, jedoch wurde anstelle des Emulgators 1 in Dosierung 2 mengengleich der handelsübliche Emulgator Sulfopon 101 spez. eingesetzt.

### Vergleichsbeispiel 3 (Vergleich 3)

Wie Beispiel 1, jedoch wurde anstelle des Emulgators 1 in Dosierung 2 mengengleich der handelsübliche Emulgator Disponil AES 13 eingesetzt.

### Beispiel 12 (Anwendungsbeispiel)

Zur Bestimmung der Wasseraufnahme von Polymerfilmen analog zu DIN EN 1024 wurden drei Filme der wie oben beschrieben hergestellten Polymerdispersionen geprüft. Die Größe der Filme betrug jeweils 75 * 35 * 0,5 mm. Die Filme wurden wie dem Fachmann bekannt in PTFE-Formen hergestellt und 48 Stunden bei 50 °C getrocknet. Die getrrockneten Filme wurden aus der Form herausgenommen und gewogen (mit einer Meßgenauigkeit von ± 0,1 Milligramm). Anschließend wurden die Filme bei 20 °C für 48 Stunden in deionisiertes Wasser gegeben. Anschließend wurde das Gewicht der feuchten Filme bestimmt. Dabei wurden die feuchten Filme zunächst mit Tissue-Papier vorsichtig abgetupft, um Wassertröpfchen von der Oberfläche des Films zu entfernen. Die Menge des absorbierten Wassers, die sich aus der Differenz des Gewichts des feuchten Films und des trockenen Films berechnet, wurde in Relation zur Masse des trockenen Films in Gewichtsprozent berechnet. Die Ergebnisse der unterschiedlichsten Tests sind der nachfolgenden Tabelle zu entnehmen:

| Polymer-System | gemäß | Wasseraufnahme |
|---|---|---|
| Styrol / Acrylat | Beispiel 1 | 11,4 % |
| Vinylacetat / Butylacrylat | Beispiel 8 | 7,2 % |
| Vinylacetat / Butylacrylat | Beispiel 9 | 10,8 % |
| Vinylacetat / Butylacrylat | Beispiel 7 | 20,5 % |
| Styrol / Acrylate | Beispiel 2 | 18,4 % |
| Styrol / Acrylate | Vergleich 2 | 13,9 % |
| Vinylacetat / Butylacrylat | Vergleich 3 | 40 % |

### Beispiel 13 (Anwendungsbeispiel)

Zur Bestimmung der Elektrolytbeständigkeit der wie oben beschrieben hergestellten Polymerdispersionen wurden je 10 ml der Polymerdispersion mit je 10 ml der folgenden Salzlösungen vermischt:
- 10% ige NaCl-Lösung
- 10% ige CaCl₂-Lösung
- 10% ige Al₂(SO₄)₃-Lösung

Die Dispersionen wurden anschließend visuell beurteilt. Die Ergebnisse können der nachfolgenden Tabelle entnommen werden. Dabei ist folgendes zu beachten: Es wurden jeweils die Salze 1-, 2- und 3-wertiger Metalle geprüft, indem man das Koagulierungsverhalten nach Zugabe des Metallsalz-Lösungen zur Polymerdispersion visuell beurteilte. Wurde keine Koagulatbildung beobachtet, so wurde das System als "stabil" bezeichnet. In diesem Sinne ist die Bezeichnung "stabil" in der nachfolgenden Tabelle zu verstehen.

| Polymer system | gemäß | stabil bzgl. NaCl | stabil bzgl. CaCl₂ | stabil bzgl. Al₂(SO₄)₃ |
|---|---|---|---|---|
| Styrol / Acrylat | Beispiel 1 | ja | ja | ja |
| Vinylacetat / Butylacrylat | Beispiel 8 | ja | ja | |
| Vinylacetat / Butylacrylat | Beispiel 9 | ja | ja | |
| Vinylacetat / Butylacrylat | Beispiel 7 | ja | | |
| Styrol / Acrylat | Beispiel 2 | ja | ja | ja |

## Patentansprüche

1. Verwendung von olefinisch ungesättigten Estern der Formel (I)
HOOC-CH=CH-COO-(BO)_{z}(PO)_{y}(EO)ₓR¹ (I)
in der R¹ für einen Alkylrest oder Alkylphenolrest mit 8 bis 24 Kohlenstoffstamen, BO für eine Butylenoxideinheit, PO für eine Propylenoxideinheit und EO für eine Ethylenoxideinheit steht und die Zahlen x, y und z unabhängig voneinander für 0 oder Zahlen von 1 bis 50 stehen, mit der Maßgabe, dass mindestens eine der Zahlen x, y und z von 0 verschieden ist, wobei die Carboxylgruppe der Verbindungen (I) teilweise oder ganz in neutralisierter Form vorliegen kann und die C=C-Doppelbindung cis- oder transkonfiguriert sein kann, als copolymerisierbare Emulgatoren in der Emulsionspolymerisation olefinisch ungesättigter Monomerer.

2. Verwendung nach Anspruch 1, wobei man Emulgatoren der Formel (I) einsetzt, in der x und y unabhängig voneinander für Zahlen von 1 bis 20 stehen und z 0 bedeutet.

3. Verwendung nach Anspruch 1, man Emulgatoren der Formel (I) einsetzt, in der x für Zahlen von 3 bis 5 steht und y und z jeweils 0 bedeuten.

4. Verwendung nach mindestens einem der Ansprüche 1 bis 3, wobei man die Emulgatoren (I) in Mengen von 0,1 bis 25 Gew.-% - bezogen auf die Summe der Monomere - einsetzt.

5. Verwendung nach einem der Ansprüche 1 bis 4, wobei man Emulgatoren der Formel (I) einsetzt, in der der Rest R¹ für einen Alkylrest mit 8 bis 14 Kohlenstoffatomen steht.

6. Verwendung nach mindestens einem der Ansprüche 1 bis 4, wobei man Monomere einsetzt, die ausgewählt sind aus der Gruppe, die gebildet wird von Acryl- und/oder Vinylverbindungen.

## Claims

1. Use of olefinically unsaturated esters of the formula (I):
HOOC-CH=CH-COO-(BO)_{z}(PO)_{y}(EO)ₓR¹ (I)
in which R¹ is an alkyl radical or alkylphenol radical having 8 to 24 carbon atoms, BO is a butylene oxide unit, PO is a propylene oxide unit and EO is an ethylene oxide unit and the numbers x, y and z independently of one another stand for 0 or for numbers from 1 to 50, with the proviso that at least one of the numbers x, y and z is not 0, it being possible for the carboxyl group of the compounds (I) to be completely or partly present in neutralized form and the C=C double bond to be cis- or trans-configured, as copolymerizable emulsifiers in the emulsion polymerization of olefinically unsaturated monomers.

2. Use as claimed in claim 1, wherein emulsifiers of formula (I), in which x and y independently of one another stand for numbers from 1 to 20 and z is 0, are used.

3. Use as claimed in claim 1, wherein emulsifiers of formula (I), in which x is a number from 3 to 5 and y and z are each 0, are used.

4. Use as claimed in at least one of claims 1 to 3, wherein the emulsifiers (I) are used in quantities of 0.1 to 25% by weight, based on the sum of the monomers.

5. Use as claimed in any of claims 1 to 4, wherein emulsifiers of formula (I) in which the radical R¹ is an alkyl radical having 8 to 14 carbon atoms are used.

6. Use as claimed in at least one of claims 1 to 4, wherein monomers selected from the group consisting of acrylic compounds and/or vinyl compounds are used.

## Revendications

1. Utilisation d'esters oléfiniquement insaturés de formule (I)
HOOC-CH=CH-COO-(BO)_{z}(PO)_{y}(EO)ₓR¹ (I)
dans laquelle R¹ représente un radical alkyle ou un radical alkylphénol comprenant 8 à 24 atomes de carbone, BO représente une unité d'oxyde de butylène, PO représente une unité d'oxyde de propylène et EO une unité d'oxyde d'éthylène et les nombres x, y et z valent, indépendamment les uns des autres, 0 ou des nombres de 1 à 50, à condition qu'au moins un des nombres x, y et z soit différent de 0, le groupe carboxyle des composés (I) pouvant se trouver partiellement ou totalement sous forme neutralisée et la double liaison C=C pouvant être configurée en cis ou en trans, comme émulsifiants copolymérisables dans la polymérisation en émulsion de monomères oléfiniquement insaturés.

2. Utilisation selon la revendication 1, où on utilise des émulsifiants de formule (I) dans laquelle x et y valent, indépendamment l'un de l'autre, des nombres de 1 à 20 et z signifie 0.

3. Utilisation selon la revendication 1, où on utilise des émulsifiants de formule (I) dans laquelle x vaut des nombres de 3 à 5 et y et z valent chacun 0.

4. Utilisation selon au moins l'une quelconque des revendications 1 à 3, où on utilise les émulsifiants (I) en des quantités de 0,1 à 25% en poids - par rapport à la somme des monomères.

5. Utilisation selon l'une quelconque des revendications 1 à 4, où on utilise des émulsifiants de formule (I), dans laquelle le radical R¹ représente un radical alkyle comprenant 8 à 14 atomes de carbone.

6. Utilisation selon au moins l'une quelconque des revendications 1 à 4, où on utilise des monomères qui sont choisis dans le groupe qui est formé par des composés d'acryle et/ou de vinyle.
